Europäisches Patentamt

European Patent Office

Office européen des brevets

(11) Publication number: **0 393 269**
**A1**

## EUROPEAN PATENT APPLICATION

(21) Application number: **89303878.6**

(22) Date of filing: **19.04.89**

(51) Int. Cl.⁵: **G01S 13/90, G01S 13/30, G01S 13/28**

(43) Date of publication of application:
**24.10.90 Bulletin 90/43**

(84) Designated Contracting States:
**CH DE FR IT LI NL SE**

(71) Applicant: **THE MARCONI COMPANY LIMITED**
**The Grove Warren Lane**
**Stanmore Middlesex HA7 4LY(GB)**

(72) Inventor: **Glasgow, John A.**

**30 Johnson Road Great Baddow**
**Chelmsford Essex(GB)**

(74) Representative: **Cockayne, Gillian et al**
**The General Electric Company plc Central**
**Patent Dept. (Chelmsford Office) Marconi**
**Research Centre West Hanningfield Road**
**Great Baddow, Chelmsford Essex CM2**
**8HN(GB)**

(54) **Range-Finding Apparatus.**

(57) Synthetic aperture sonar apparatus for mapping a target area divides the across track range into two or more divisions, and has a receiver (4,11) for each range division. A number of distinguishable pulse signal forms, equal in number to the square of the number of range divisions, are transmitted in a predetermined sequence, enabling each receiver (4,11) to identify signals received only from its appropriate range division, thus improving across-track range resolution.

In another embodiment of the invention, a continuous noise-like waveform is transmitted and signal returns compared with reference waveforms derived from the transmitted signal to obtain the range of a target.

*FIG.1*

EP 0 393 269 A1

## RANGE-FINDING APPARATUS

This invention relates to range-finding apparatus and is particularly useful in side-looking synthetic aperture sonar apparatus, which in turn has applications, for example, in mapping of the ocean bed.

Synthetic aperture sonar has potentially a much better resolution than real aperture sonar, but, when synthetic aperture radar techniques are applied directly to sonar, the resulting synthetic aperture sonar suffers certain defects arising from the low speed of propagation of the range-finding wave. Where the sonar apparatus is travelling relative to an area to be mapped, the requirement for unambiguity in the return signals imposes unacceptable limitations on the speed of travel of the sonar and, together with the limited power which may be transmitted and received, severely limits the across-track resolution which may be obtained. In an attempt to solve these problems as disclosed in our co-pending patent application no. 8719799 filed on 21st August 1987, our invention uses the time distortion and Doppler shift in the return signals, as the sonar apparatus passes the target, to resolve the position of the target either across the track or along the track or both. A continuous wave is transmitted, and time-distorted signals with Doppler shifts are returned having slopes dependant on the across-track range of the originating reflector. In the preferred embodiment of this invention, the time-distorted signals are correlated with reference waves to determine across-track positions; the along-track position is determined unambiguously from the timing of the pulsed output signals from the correlator by compensating for the duration of the signal and the reference wave for the particular cross-track range for a given sonar beam width. In effect, the along-track position is determined by deducing the instant (and, from a knowledge of the along-track speed of the sonar, the position) at which the sonar apparatus was closest to the relevant target area; at this closest position, the return signal undergoes zero Doppler shift and corresponds to the mid-point of the Doppler chirp in the reference waveform.

In order to obtain good across-track resolution, it is proposed in the co-pending patent application No. 8719799 to modulate the transmitted signal, using, for example, a pseudo-random code: the correlator then additionally compresses the return signals, acting as a matched filter. The purpose of the present invention is to improve further the capability of range-finding apparatus, such as that disclosed in the above-mentioned co-pending patent application, to resolve targets in the across-track direction.

The present invention provides range-finding apparatus for relative movement along a track to resolve targets in any of N range divisions, where N is an integer greater than one, comprising means for transmitting a signal, parts of which are distinguishable from other parts, receiving means which recognise range data comprising the returns of N distinct signal forms each corresponding to a different range division, and an along-track correlator which performs a coherent integration of the said range data by correlating all the said range data with a plurality of reference wave forms each representing a return appropriate to a particular cross-track target range, to provide output range data indicative of the instants at which the respective target points which returned those range data were closest to the track. The apparatus, which may be radar but is preferably sonar, thus divides the range, which would preferably be the across-track range in synthetic aperture sonar, into a plurality of range divisions, and is able immediately to recognise from which division a set of return signals originated.

In one embodiment of the invention, the said signal is a series of distinguishable pulse signals, and the receiving means recognises range data in each of different portions of an overall pulse repetition interval.

The distinguishable pulse signal forms are preferably all orthogonal.

In a preferred form of the invention, the distinguishable signals are chirps of different slopes.

Preferably, the receiving means comprises a correlator for each range division which correlates the said returns with N reference wave forms corresponding to the N distinct pulse signal forms associated with that range division.

In a preferred embodiment of the invention the signal is a continuous wave having a characteristic which varies with time, and advantageously the signal is a noise-like waveform. This enables parts of the signal to be distinguished from other parts and hence enables the range of a target returning the signal to be determined.

The range divisions are preferably contiguous and preferably of unequal length.

Some ways in which the invention may be put into effect will now be described, by way of example only, with reference to the accompanying drawings, of which:

Figure 1 is a schematic block diagram of sonar apparatus embodying the invention:

Figures 2a and 2b are frequency-time graphs illustrating two possible sets of sixteen distinguishable pulse signals in the form of chirps;

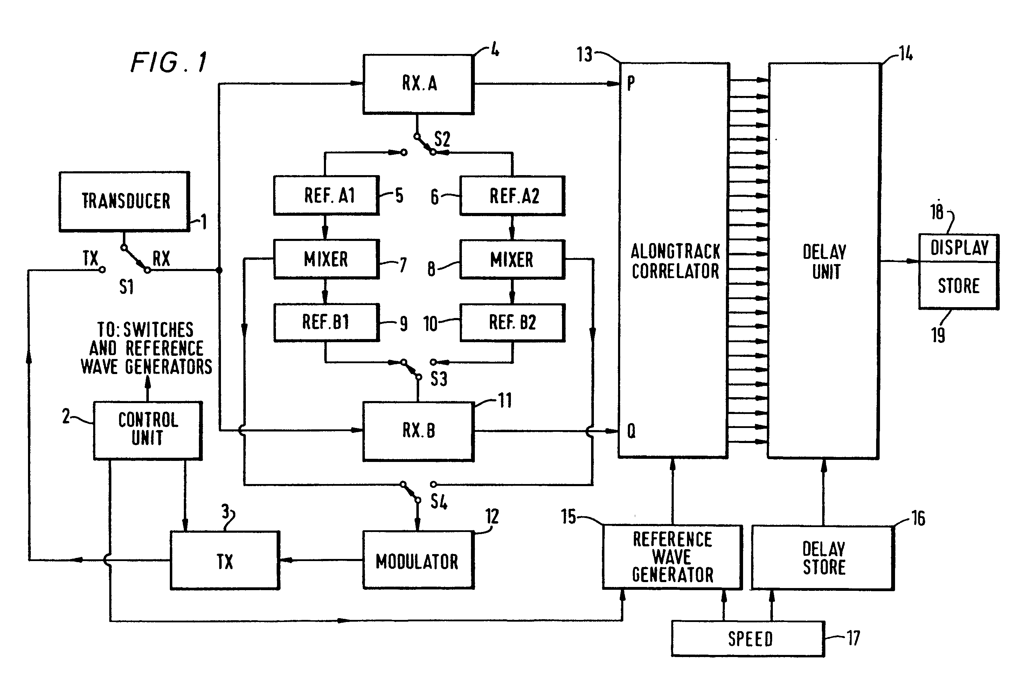

Figure 3 is an amplitude-time diagram of packets of pulses, representing range returns, which act as

2

inputs P and Q to the along-track correlator of the sonar apparatus of Figure 1:

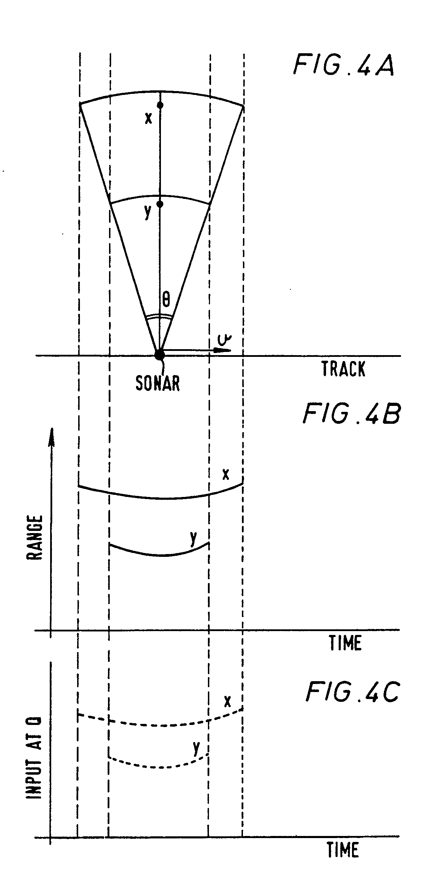

Figure 4a is a schematic diagram, in plan view, of a portion of the ocean bed traversed by the sonar apparatus of Figure 1 along the track illustrating the sonar beam directed sideways;

Figure 4b is a range-time graph for two targets, X and Y, on the diagram of Figure 4a, having the same along-track position but different cross-track positions, illustrating the manner in which the range changes as the sonar apparatus travels at constant velocity:

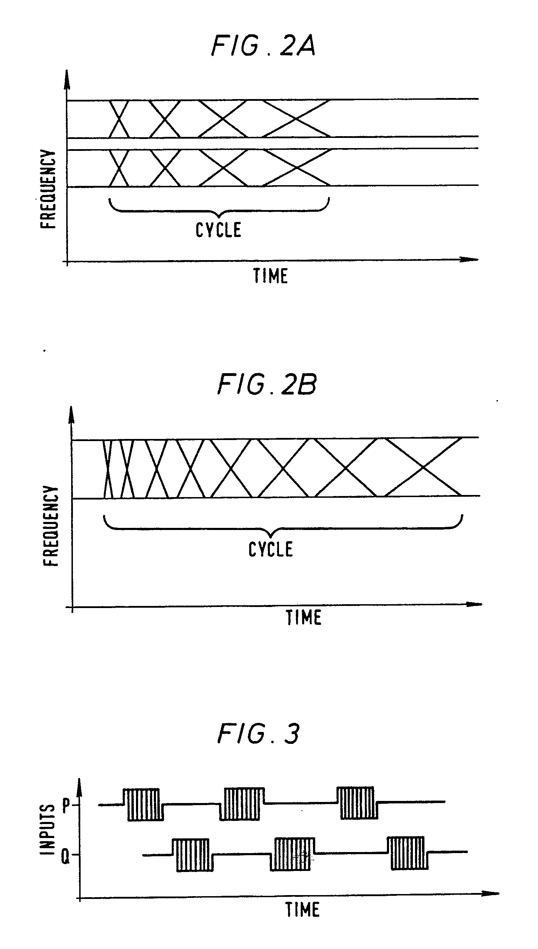

Figure 4c is a diagram, over a larger time scale than that of Figure 3, illustrating the effect of the range variation illustrated in Figure 4b on the input at Q to the along-track correlator of Figure 1, as a function of the time within one repetition cycle of the sequence of distinguishable signals transmitted; and

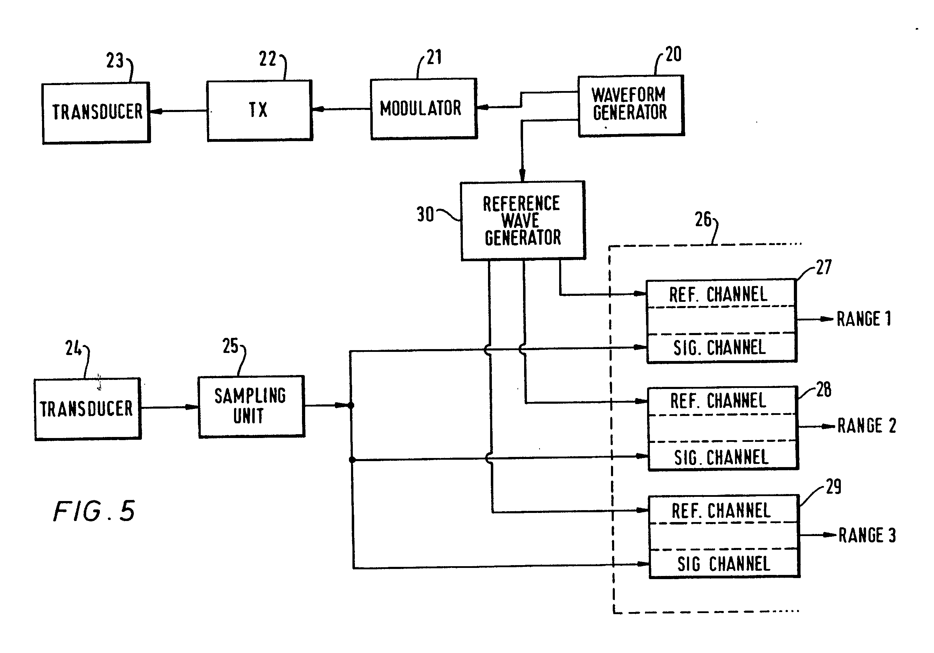

Figure 5 is a schematic block diagram of another sonar apparatus in accordance with the invention.

With reference first to Figure 1, side-looking synthetic aperture sonar apparatus comprises a transducer 1 for transmitting and receiving sonar, carried by a tow-fish drawn for example by a submarine. The sonar apparatus is adapted to be drawn along a straight track, as shown in Figure 4a, at a velocity v relative to the sea bed which is to be mapped. As shown in Figure 4a the transducer 1 transmits sonar only over a well-defined beam width of angle $\theta$ , and targets such as X and Y are insonified for different durations dependent upon their across-track range.

A control unit 2 controls a switch S1 which connects the transducer either for transmission (TX) or reception (RX). A transmitter unit 3, controlled by the control unit 2, provides transmission signals to the transducer 1, the signals being modulated by a modulator 12.

Four distinguishable signals A1, A2, B1 and B2 are provided by respective reference waveform generators 5, 6, 9 and 10 under the control of the control units 2. In this example, the four reference wave forms are chirps of equal bandwidth, chirps A1 and A2 being of equal and opposite slopes rather greater in magnitude than those of both wave forms B1 and B2 which are also equal and opposit

As illustrated in Table 1 below, chirps A1 and B1 are transmitted together, and then, after a delay for reception, chirps A2 and B2 are transmitted together, before a further delay for reception. This sequence constitutes a repetition cycle of transmission, equivalent to a complete pulse repetition interval (PRI). This transmission is achieved by supplying the modulator 12, via a switch S4, alternately from mixers 7 and 8 which mix respectively chirps A1 and B1 together and chirps A2 and B2 together.

## TABLE 1

TIME

| | | | | | | | |
|------|-----|-----|-----|-----|-----|-----|-----|
| TX | A1 | A2 | | A1 | | A2 | |
| RX.A | | A1 | | A2 | | A1 | | A2 |
| TX | B1 | B2 | | B1 | | B2 | |
| RX.B | | B2 | | B1 | | B2 | | B1 |

CYCLE

In the intervals between transmissions, signals are received simultaneously by receivers RX.A 4 and RX.B 11 which are across-track correlators respectively for shorter ranges and longer ranges. The PRI is chosen so as to be sufficiently long to enable signals from the most distant target point to be received before the beginning of the next PRI. The total range is divided into two divisions, preferably of equal length.

As shown in Table 1, during the second quarter of a PRI, the short-range receiver 4 is set to correlate signals with reference wave form A1 supplied by reference wave form generator 5 via the switch S2 under the control of the control unit 2. At the same time, the long-range receiver 11 correlates signals with reference wave form B2 via the switch S3. In the fourth quarter of the PRI, switches S2 and S3 are both changed simultaneously so that the short-range and long-range receivers 4, 11 correlate signals respectively with wave forms A2 and B1.

Thus the short-range and long-range receivers are made to discriminate those signals originating from their respective range divisions, and to supply across-track range data, in the format illustrated schematically in Figure 3, to respective inputs P and Q of an along-track correlator 13.

The purpose and function of the along-track correlator 13 is shown in Figures 4A, 4B and 4C, which relate to two targets X, Y both in the long-range division. The signals arriving at the input Q, as shown in Figure 3, and Figure 4C, consist of short packets of range data in the form of pulses. The phase of each packet in relation to the transmission PRI changes with the position of the sonar apparatus along the track, and this is illustrated with respect to the input at Q in Figure 4C for the two targets X and Y, each dot of the curve of dots representing a packet of range data. The along-track correlator 13 integrates the sequence of packets for each target X, Y, etc., taking account of the timing and phase variation due to the movement of the sonar apparatus.

This is achieved by correlating the input signals at P and Q with respective reference waves, corresponding in shape to series of curves such as those of Figure 4B, produced by a reference wave generator 15 which is provided with a signal 17 representing the speed v of the sonar apparatus along the track, and is controlled by the control unit 2. The output of the along-track correlator 13 is provided on a large number of parallel gates each representing a different across-track range. Half of the range gates are provided with output signals derived from the input signal P, and the other half from signal Q.

The reference waves for this correlation process extend over a series of overlapping brackets of range and are applied simultaneously to cater for targets at different ranges.

In order to make an accurate determination of the along-track position for each target represented by a pulse on an output range gate of the along-track correlator 13, a delay unit 14 delays the signals at each range gate by a different amount in accordance with delay values recorded in a delay store 16, those values in turn depending upon the vehicle speed v provided as the speed signal 17. As described in the co-pending patent application mentioned above, the output on any given range gate from a particular target point terminates at an instant which is a function of the across-track range. For example, in Figure 4C the signal corresponding to target X terminates later than that corresponding to target Y, because target point X is insonified for a longer period. Delays are applied by the delay unit 14 to compensate for this effect, so that the resulting signals output from the delay unit 14 occur at instants corresponding to when the corresponding target points were closest to the sonar apparatus, i.e. the timing of the output signals represents the along-track positions of the corresponding target points. The information output from the delay unit 14 is multiplexed and sent digitally to a display 18 and/or a store 19.

The display 18 may, for example, consist of a visual display unit provided with an appropriate buffer store, for displaying a two-dimensional map of the target point.

It will be appreciated that the across-track range could be divided into any number N of divisions, where N is two or more. In the case of three divisions, $3^2$ (or 9) distinguishable signals would be required, three for each range division. A transmission and reception sequence corresponding to Table 1 is shown below in Table 2, in which the short range, medium range and long range signals are indicated as A1, A2, A3; B1, B2, B3; C1, C2, C3 respectively. It will be appreciated that the repetition cycle or PRI is divided into N portions, and the shortest range signal is received in the first portion, the next shortest range is received in the next portion and so on.

TABLE 2                  TIME ⟶

| Tx | Rx | Tx | Rx | Tx | Rx |
|----|----|----|----|----|----|
| A1 | A1 | A2 | A2 | A3 | A3 |
| B1 | B3 | B2 | B1 | B3 | B2 |
| C1 | C2 | C2 | C3 | C3 | C1 |

By way of a further example, where N = 4, $4^2$ = 16 distinguishable signals are required. This may be achieved, as shown in Figure 2A, by providing two separate frequency bands each having 8 chirps with four different gradients and two different directions of slope. In Figure 2B, the sixteen chirps all span the same frequency band, and comprise eight different gradients and two different directions of a slope.

Although the distinguishable signals have been described by way of example as linear chirps, many alternative forms of signal would be appropriate. One alternative would, for example, be a continuous wave signal modulated with $N^2$ different codes, for example pseudo-random codes.

It is not necessary for the transmission power of each signal form to be the same. Those signals used only for the shorter ranges may be of lower average power than those for longer ranges. This is accomplished with the chirp wave forms illustrated in Figure 2A, for example, by arranging that the chirps of longer duration, and thus of greater average power, are used for the longer range divisions.

With reference to Figure 5, another side-looking synthetic sonar apparatus includes a waveform generator 20 which is arranged to generate a continuous noise-like waveform that is known to be sensitive to Doppler shift. This is applied via a modulator 21 and a transmitter 22 to a transducer 23 where it is converted into sonar and arranged to insonify the sea-bed over which the sonar apparatus is drawn. The sonar apparatus also includes a second transducer 24 which is arranged to receive signals returned from targets distributed over the sea-bed. The output of the transducer 24 is amplified at 25 and applied to a correlator unit 26.

The correlator unit 26 comprises a plurality of correlators only three of which 27, 28 and 29 are shown.

Each correlator consists of two channels, each being constructed as a shift register, one being a signal channel 27A, 28A and 29A, and the other being a reference wave channel 27B, 28B and 29B. Each correlator also includes a multiplier 27C, 28C and 29C and an adder 27D, 28D and 29D.

The received waveform is applied in parallel to the signal channel 27A, 28A and 29A of correlator 27, 28 and 29. The output of the waveform generator 20 is a waveform generator also fed to a computing unit 30 which modifies it to produce a series of waveforms corresponding to those which would be received from targets at different ranges. Each time the received signal is sampled, the computing unit 30 calculates the appropriate sample value that is to be used in each reference waveform by allowing for the movement of the sonar apparatus within the propagation time delay and calculating the propagation path delay that occurs between transmission, reflection at the target and the passage back to the receiving transducer 24. Thus, the instantaneous value of the transmission at the relevan time may be determined, producing a series of reference waves. The generated reference waves are applied to respective different reference channels 27B, 28B and 29C.

The sampled received signal and the series of sample values for each reference signal are applied to the correlator 27, 28 and 29, and cross-correlated by the multipliers and adders. The output of each correlator then indicates the level of any target return for the range with which it is associated.

In an alternative embodiment (not shown) only one receiver shift register is required and the reference wave is time multiplexed for different ranges. In this way, a sequence of outputs that correspond to a sequence of separate ranges may be obtained.

## Claims

1. Range-finding apparatus for relative movement along a track to resolve targets in any of N range divisions, where N is an integer greater than 1, comprising means for transmitting a signal, parts of which are distinguishable from other parts, receiving means which recognise range data comprising the returns of N distinct signal forms each corresponding to a different range division, and an along-track correlator which performs a coherent integration of the said range data by correlating all the said range data with a plurality of reference wave forms each representing a return appropriate to a particular cross-track target range, to provide output range data indicative of the instants at which the respective target points which returned those range data were closest to the track.

2. Range-finding apparatus according to claim 1 wherein the said signal is a series of distinguishable pulse signals and the receiving means recognises range data in each of different portions of an overall pulse repetition interval.

3. Range-finding apparatus according to Claim 2, wherein the pulse signals are transmitted in N2 distinguishable forms, of which N different ones are transmitted in each of N portions of an overall pulse repetition interval.

4. Range-finding apparatus according to claim 2 or 3, wherein the distinguishable pulse signal forms are all orthogonal.

5. Range-finding apparatus according to claim 2, 3 or 4, wherein the distinguishable pulse signals are chirps of different slopes.

6. Range-finding apparatus according to any of claims 2 to 5, wherein the receiving means comprises a correlator for each range division which correlates the said returns with N reference wave forms corresponding to the N distinct pulse signal forms associated with that range division.

7. Range-finding apparatus according to claim 6, comprising control means for causing each correlator to correlate the said returns with the N reference wave forms in a predetermined sequence, the reference wave form being different for each said portion of the pulse repetition interval.

8. Range-finding apparatus according to any of claims 2 to 7, wherein the signals transmitted in each portion of the pulse repetition interval are transmitted simultaneously by the same transmitter.

9. Range-finding apparatus according to claim 1 wherein the signal is a continuous wave having a characteristic which varies with time.

10. Range-finding apparatus as claimed in claim 9 wherein the signal is a noise-like waveform.

11. Range-finding apparatus as claimed in any preceding claim wherein the range divisions are contiguous.

12. Range-finding apparatus according to any preceding claim, wherein the apparatus determines, from the said output range data and from a determination of the speed of the sonar apparatus along the track, the along-track positions of the target points.

13. Range-finding apparatus according to any preceding claim, wherein the said output range data are provided at a multitude of range gates each corresponding to a different across-track range.

14. Range-finding apparatus according to claim 13, comprising a delay unit for delaying the signals at the range gates by different amounts as a function of across-track range, to compensate for the variation of insonification period of targets with their across-track range, such that the delayed signals occur at instants representative of the along-track position of the corresponding target points.

15. Range-finding apparatus according to claim 14, wherein the said delay unit responds to the speed of the range-finding apparatus along the track to introduce delays proportional to that speed.

FIG.1

EP 0 393 269 A1

*FIG . 2A*

*FIG . 2B*

*FIG . 3*

FIG.4A

FIG.4B

FIG.4C

*FIG.5*

EP 0 393 269 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| E | GB-A-2 208 933 (MARCONI CO. LTD) <br> * Whole document * <br> --- | 1-15 | G 01 S 13/90 <br> G 01 S 13/30 <br> G 01 S 13/28 |
| D,E | GB-A-2 208 932 (MARCONI CO. LTD) <br> * Whole document * <br> --- | 1,9-15 | |
| X | EP-A-0 282 265 (BRITISH AEROSPACE) <br> * Abstract; column 2, line 40 - column 3, line 13; column 5, line 33 - column 6, line 32; figure 2 * <br> --- | 1,2,4,6 ,7,12 | |
| Y | EP-A-0 251 498 (THORN EMI LTD) <br> * Whole document * <br> --- | 1,2,5-8 | |
| Y | EP-A-0 064 305 (H.S.A. B.V.) <br> * Whole document * <br> --- | 1,2,5-8 | |
| A | EP-A-0 199 571 (M.J. CUSDIN) <br> * Abstract; figure 1; page 6, line 11 - page 7, line 20 * <br> --- | 9-11 | |
| A | EP-A-0 049 087 (MARCONI CO. LTD) <br> * Abstract; figure 1 * <br> --- | 1,2,5 | TECHNICAL FIELDS SEARCHED (Int. Cl.5) <br><br> G 01 S |
| A | US-A-4 053 884 (CANTRELL et al.) <br> * Whole document * <br> ----- | 1,2,4-6 | |

The present search report has been drawn up for all claims

| Place of search | Date of completion of the search | Examiner |
|---|---|---|
| THE HAGUE | 09-11-1989 | BLONDEL F.J.M.L.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)